# EUROPEAN PATENT APPLICATION

(11) **EP 1 260 328 A2**
(43) Date of publication of application: **27.11.2002**
(21) Application number: 02011453.4
(22) Date of filing: 24.05.2002
(51) Int. Cl.: B27B 5/065, B27B 31/00, B23D 47/04

(54) **Cutting machine**

(30) Priority: 25.05.2001 IT TO20010500
(71) Applicant: ISP Systems S.r.l., 61100 Pesaro (IT)
(72) Inventor: Pritelli, Giuseppe, 47033 Cattolica (IT)
(74) Representative: Cerbaro, Elena, Dr.

(57) **Abstract**

A cutting machine for cutting bars (2) of wood or similar into panels (3) has a conveying device (4) for feeding at least two bars (2) along respective substantially parallel feed channels (12); and a cutting device (6) for cutting the bars (2) crosswise to their feed direction (5); each feed channel (12) being defined by at least to guide members (10) located on opposite sides of the relative bar (2).

## Description

The present invention relates to a cutting machine for cutting bars of wood or similar into panels.

The present invention may be used to advantage in the furniture industry, to which the following description refers purely by way of example.

In wood-working, a cutting machine is used for cutting a number of parallel bars arranged side by side contacting one another. For which purpose, the cutting machine comprises a number of push members operated independently to feed respective bars in steps along respective substantially parallel paths and through a cutting station where, at each operating cycle of the machine, a cutting device cuts the bars along a cutting line substantially crosswise to the paths.

Since each push member is operated independently of the others to obtain, at each operating cycle of the machine and from each bar at the cutting station, a panel of a given length measured parallel to the respective path, a major drawback of known cutting machines of the above type lies in adjacent contacting bars possibly being fed at different speeds along the respective paths, thus resulting in friction preventing the bars from being fed smoothly and accurately.

It is an object of the present invention to provide a cutting machine designed to eliminate the aforementioned drawbacks.

According to the present invention, there is provided a cutting machine for cutting bars of wood or similar into panels, the machine comprising a cutting station; conveying means for feeding at least two said bars along respective substantially parallel paths and through said cutting station; and cutting means located at the cutting station to cut said bars, in use, in a first direction substantially crosswise to said paths; and being characterized by also comprising guide means defining a feed channel for feeding each said bar along the respective said path.

A preferred, non-limiting embodiment of the present invention will be described by way of example with reference to the accompanying drawings, in which:
Figure 1 shows a schematic plan view, with parts in section and parts removed for clarity, of a preferred embodiment of the machine according to the present invention;
Figure 2 shows a schematic view in perspective of a first detail of the Figure 1 machine;
Figure 3 shows a side view of a second detail of the Figure 1 machine;
Figure 4 shows a side view of a third detail of the Figure 1 machine.

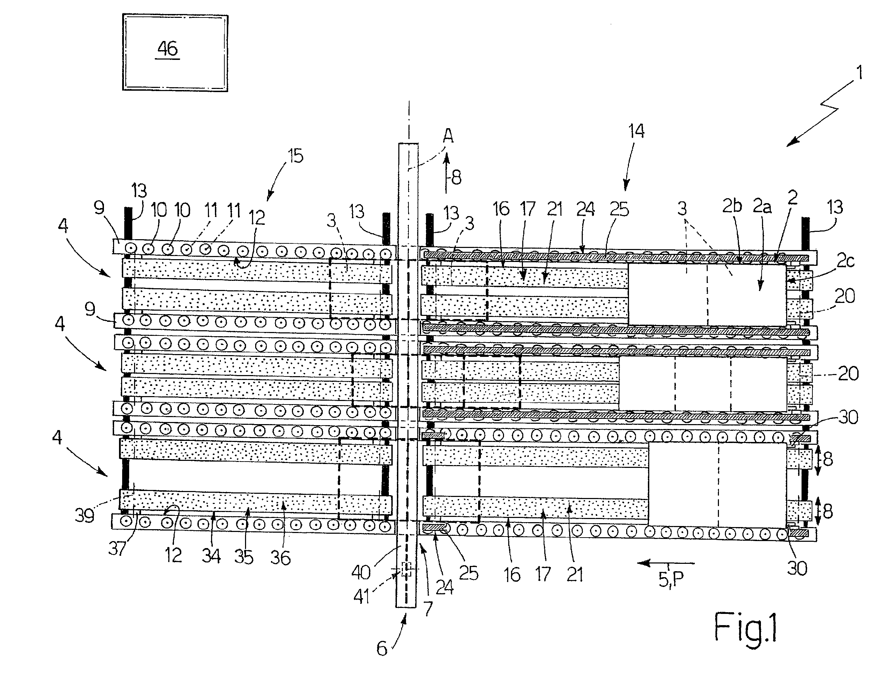

Number 1 in Figure 1 indicates as a whole a cutting machine for cutting bars 2 of wood or similar into panels 3. Each bar 2 is substantially parallelepiped-shaped with a substantially rectangular section, and comprises two substantially parallel major lateral faces 2a; two substantially parallel minor lateral faces 2b perpendicular to faces 2a; and two substantially parallel minor lateral faces 2c perpendicular to faces 2a and 2b.

Machine 1 comprises a number of (in the example shown, three) conveying units 4 extending in a horizontal direction 5 and along respective substantially parallel paths P; and a cutting device 6, which, at each operating cycle of machine 1 and at a cutting station 7 located along paths P, cuts bars 2 in a substantially horizontal direction 8 crosswise to direction 5.

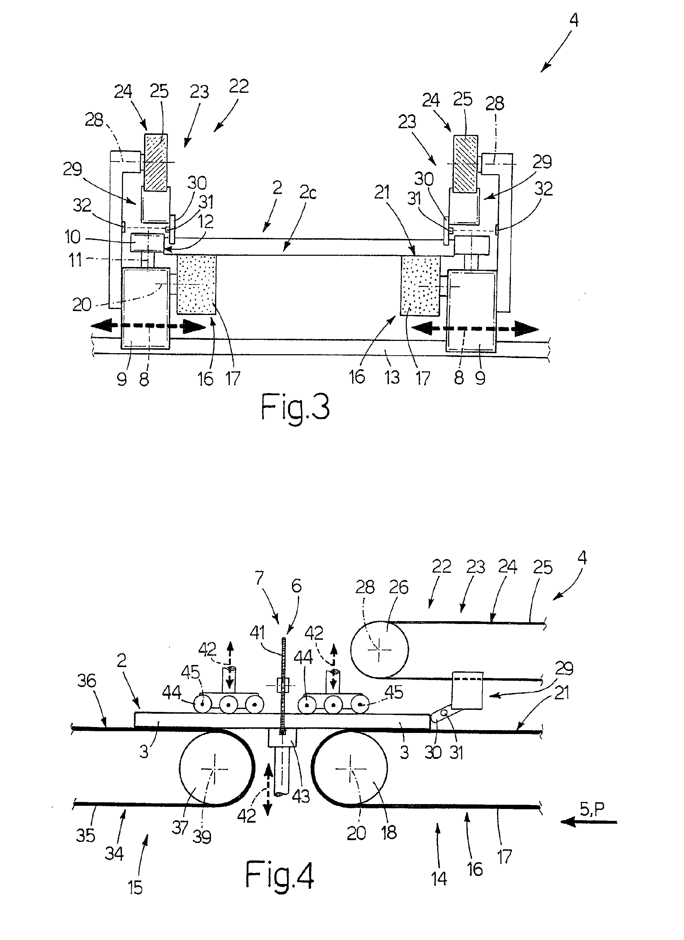

With reference to Figures 1 and 3, each unit 4 comprises two longitudinal members 9 extending parallel to direction 5, and each having a respective number of guide wheels 10, which are arranged successively in direction 5, are fitted to relative longitudinal member 9 to rotate about respective axes 11 parallel to one another and perpendicular to directions 5 and 8, and, together with wheels 10 of the other longitudinal member 9, define a feed channel 12.

The two longitudinal members 9 are fitted in known manner to a number of fixed guides 13 parallel to one another and to direction 8, and can be moved linearly with respect to each other in direction 8 to selectively adjust the width, measured parallel to direction 8, of relative channel 12 as a function of the width, also measured parallel to direction 8, of relative bar 2.

Unit 4 also comprises two conveying devices 14, 15 located upstream and downstream respectively from station 7 in direction 5 to define relative path P; device 14 provides for feeding relative bar 2 between an input station and station 7, and device 15 for feeding relative panel 3 between station 7 and an unloading station.

Device 14 comprises two endless conveyors 16, each having a respective belt 17, which is movable in a vertical plane parallel to direction 5, and is looped about two pulleys 18 fitted in rotary manner to one of longitudinal members 9 and rotated in steps - with respect to longitudinal member 9 and by a motor 19 (in the example shown, an electric brushless motor) - about respective longitudinal axes 20 substantially parallel to each other and to direction 8.

The two belts 17 have respective top conveying branches 21 coplanar with each other to define a conveying surface for relative bar 2, which is fed in direction 5 with faces 2b parallel to, and faces 2c perpendicular to, direction 5.

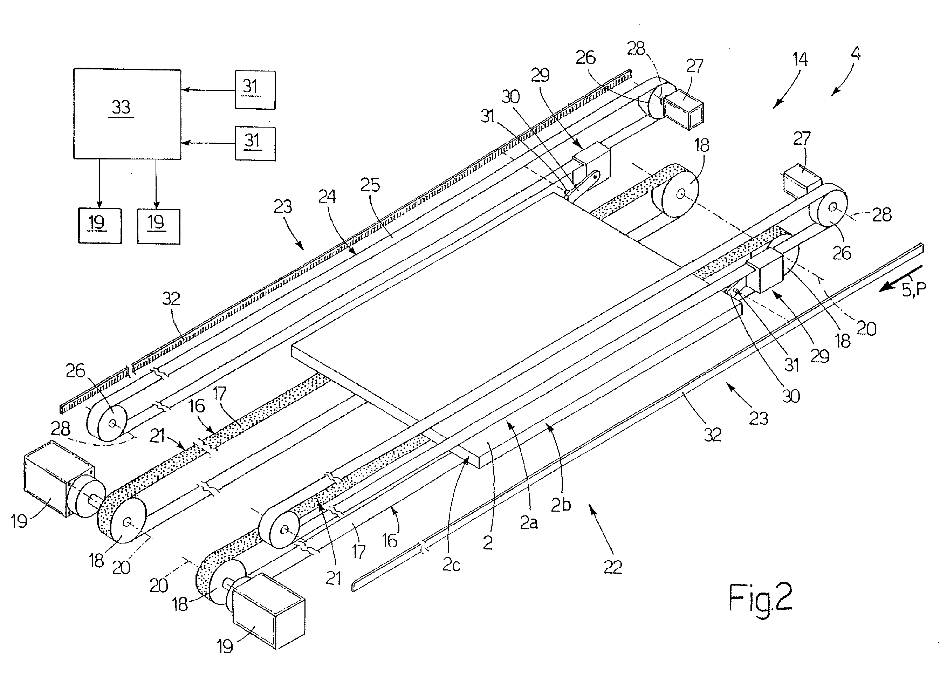

With reference to Figure 2, device 14 also comprises a control unit 22, in turn comprising a number of control devices 23 equal in number to conveyors 16. Each device 23 comprises an endless conveyor 24 having a belt 25, which is movable in a vertical plane substantially parallel to direction 5, and is looped about two pulleys 26 - one of which is powered by a motor 27 (in the example shown, an electric brushless motor) - fitted in rotary manner to one of longitudinal members 9 and rotated, with respect to relative longitudinal member 9, about respective axes 28 substantially parallel to axes 20.

Device 23 also comprises a control member 29, in turn comprising a touch-rod 30, which is fitted to belt 25, is designed to contact, in use, the rear face 2c in direction 5, and has a sensor 31 (in the example shown, an optical or magnetic sensor) whose position along relative path P is determined on a metric scale 32 fitted to relative longitudinal member 9 (Figure 3) and parallel to direction 5.

In connection with the above, it should be pointed out that:
along relative path P, the two rods 30 are positioned contacting distinct portions of rear face 2c; and
each motor 27 is a torque-controlled motor, which maintains a substantially constant contact pressure of relative rod 30 on bar 2, regardless of the law of motion by which bar 2 is fed along relative path P.

Unit 22 also comprises an electronic central control unit 33, which receives position signals from the two sensors 31, compares the signals, and selectively controls operation of the two motors 19 to keep the two sensors 31 aligned with each other in direction 8.

In actual use, the position of bar 2 with respect to direction 5 may vary due to different friction conditions between bar 2 and each of belts 17 and/or due to vibration of bar 2 caused by the flexible structure of conveyors 16. Since a constant contact pressure is maintained between both rods 30 and rear face 2c, the two sensors 31 are misaligned with respect to each other in direction 8 when faces 2c are positioned forming an angle of other than 90° with direction 5; in which case, electronic central control unit 33 receives two different position signals, one for each sensor 31, and commands at least one of motors 19 so that, by accelerating or decelerating relative conveyor 16, both sensors 31 are brought back into alignment in direction 8, i.e. faces 2b are again parallel to, and faces 2c perpendicular to, direction 5.

With reference to Figure 1, device 15 comprises two endless conveyors 34, which are located in series with relative conveyors 16, and have respective belts 35 having respective conveying branches 36 substantially coplanar with branches 21. Each belt 35 is looped about two pulleys 37 fitted in rotary manner to one of longitudinal members 9 and rotated in steps - with respect to longitudinal member 9 and by a motor (in the example shown, an electric brushless motor not shown) - about respective longitudinal axes 39 substantially parallel to each other and to axes 20.

With reference to Figure 1, device 6 comprises two uprights (not shown); a horizontal cross member 40 extending between the uprights (not shown) and parallel to direction 8; and a cutting member 41 fitted in known manner to cross member 40 to move linearly in direction 8 and in a vertical direction 42 perpendicular to directions 5 and 8, and which, at each operating cycle of machine 1, cuts all the bars 2 in station 7 along a cutting line A parallel to direction 8.

With reference to Figure 4, device 6 also comprises a bottom supporting plate 43, which extends, parallel to direction 8, between conveyors 16 and 34, and is movable in direction 42 to and from a raised operating position, in which plate 43 is substantially coplanar with branches 21 and 36, so as to engage the bottom faces 2a of bars 2 at station 7 during the cutting operation.

Device 6 also comprises a number of pressure wheels 44, which are located some upstream and some downstream from member 41 in direction 5, are mounted to rotate about respective axes 45 parallel to one another and to direction 8, and, when cutting bars 2, are positioned so as to engage top faces 2a of bars 2.

Operation of machine 1 will now be described with reference to Figure 1, and as of when each feed channel 12 houses a relative bar 2, which may differ from the bars 2 housed in the other channels 12 in terms of size, measured parallel to directions 5, 8 and/or 42, in terms of the color of surfaces 2a, 2b and/or 2c, and in terms of surface finish.

Conveying units 4 are operated selectively and independently by an electronic central control unit 46 normally common to all of units 4, and which feeds each bar 2 in direction 5, so that, at cutting station 7, a respective portion of given length of each bar 2 is located downstream from cutting line A.

Once bars 2 are fed into station 7, conveyors 16 are deactivated; plate 43 is moved into the raised operating position; and cutting member 41, engaging a slit formed through plate 43, cuts bars 2 to obtain, from each bar 2, a panel 3 of a given length measured parallel to direction 5.

At this point, plate 43 is moved into a lowered rest position; conveyors 34 are activated to feed panels 3 in direction 5 to said unloading station; and the above operating sequence is repeated at the next operating cycle of machine 1.

Machine 1 has the following main advantages:
each channel 12 can be fed with a bar 2, which may differ from the bars 2 housed in the other channels 12 in terms of size, measured parallel to directions 5, 8 and/or 42, in terms of the color of surfaces 2a, 2b and/or 2c, and in terms of surface finish;
the width of each channel 12 can be controlled selectively as a function of the width of relative bar 2;
each empty channel 12 can be fed with another bar 2 independently of the other channels 12;
cutting member 41 operates correctly regardless of the shape of the cross section of bars 2; and
machine 1 can be programmed to form successive panels 3 defining the same piece of furniture.

## Claims

1. A cutting machine for cutting bars (2) of wood or similar into panels (3), the machine comprising a cutting station (7); conveying means (4) for feeding at least two said bars (2) along respective substantially parallel paths (P) and through said cutting station (7); and cutting means (6) located at the cutting station (7) to cut said bars (2), in use, in a first direction (8) substantially crosswise to said paths (P); and being **characterized by** also comprising guide means (10) defining a feed channel (12) for feeding each said bar (2) along the respective said path (P).

2. A machine as claimed in Claim 1, wherein each said feed channel (12) has a dimension, measured parallel to said first direction (8), which is selectively controllable as a function of the width, also measured parallel to said first direction (8), of the relative said bar (2).

3. A machine as claimed in Claim 1 or 2, wherein said conveying means (4) comprise a number of conveying units (4), each for feeding a respective said bar (2) along the relative said feed channel (12); said conveying units (4) being operated independently of one another.

4. A machine as claimed in Claim 3, wherein each said conveying unit (4) comprises at least two supporting longitudinal members (9) substantially parallel to each other and to the relative said path (P); and, for each said longitudinal member (9), at least two conveying members (16, 34) mounted in series with each other; said longitudinal members (9) being movable with respect to each other in said first direction (8).

5. A machine as claimed in Claim 4, wherein a first said conveying member (16) is located upstream from said cutting station (7) in a second direction (5) substantially parallel to said paths (P); and a second said conveying member (34) is located downstream from said cutting station (7) in said second direction (5).

6. A machine as claimed in Claim 5, wherein each said bar (2) is substantially in the form of a rectangular-section parallelepiped having two faces (2c) substantially perpendicular to said second direction (5); control means (23) selectively controlling operation of the relative said conveying unit (4) to keep said faces (2c) perpendicular to the relative said path (P) along at least a portion of the relative path (P) defined by the relative said first conveying members (16).

7. A machine as claimed in Claim 6, wherein said control means (23) comprise, for each said first conveying member (16), at least one control member (29) positioned, in use, contacting one of said faces (2c); and fixed reference means (32) located along said path (P) to determine the position of the relative said control member (29) along the path (P).

8. A machine as claimed in Claim 7, wherein said control means (23) comprise central control means (33) for adjusting a traveling speed of at least one of said first conveying members (16) when, in use, said control members (29) are misaligned with each other in said first direction (8).

9. A machine as claimed in Claim 8, wherein said control means (23) comprise, for each said control member (29), a further conveying member (24) for moving the relative control member (29) along said path (P); said further conveying member (24) being selectively controllable to maintain a substantially constant contact pressure between the relative said control member (29) and the relative said bar (2), at least along said portion of said path (P).

10. A machine as claimed in any one of Claims 4 to 9, wherein said guide means (10) comprise, for each said longitudinal member (9), at least two guide members (10) located respectively upstream and downstream from said cutting station (7) in a second direction (5) substantially parallel to said paths (P).
